# EUROPÄISCHE PATENTSCHRIFT

(11) **EP 3 569 850 B1**
(45) Veröffentlichungstag und Bekanntmachung des Hinweises auf die Patenterteilung: **07.07.2021**
(21) Anmeldenummer: 19172348.5
(22) Anmeldetag: 02.05.2019
(51) Int. Cl.: F02D 41/06, F02N 11/08, F02N 19/04, F02D 43/04, F02D 41/30, F02P 9/00, F02N 19/00

(54) **VERFAHREN ZUR REDUZIERUNG DER PARTIKELEMISSIONEN BEI EINEM KALTSTART EINES VERBRENNUNGSMOTORS**
METHOD FOR REDUCING PARTICLE EMISSIONS DURING A COLD START OF A COMBUSTION ENGINE
PROCÉDÉ DE RÉDUCTION DES ÉMISSIONS DE PARTICULES LORS D'UN DÉMARRAGE À FROID D'UN MOTEUR À COMBUSTION INTERNE

(30) Priorität: 16.05.2018 DE 102018111738
(43) Veröffentlichungstag der Anmeldung: 20.11.2019
(73) Patentinhaber: VOLKSWAGEN AKTIENGESELLSCHAFT, 38440 Wolfsburg (DE)
(72) Erfinder: Sudschajew, David, 38527 Abbesbüttel (DE)
(74) Vertreter: Gulde & Partner

(56) Entgegenhaltungen:
- DE-A1-102010 034 443
- DE-A1-102010 048 355
- DE-A1-102015 103 991
- DE-A1-102016 208 177

## Beschreibung

Die Erfindung betrifft ein Verfahren zur Reduzierung der Partikelemissionen eines Verbrennungsmotors, insbesondere eines Ottomotors, bei einem Kaltstart des Verbrennungsmotors sowie ein Steuergerät zur Durchführung eines solchen Verfahrens.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem überstöchiometrischen Verbrennungsluftverhältnis nach dem Kaltstart, kalter Zylinderwände sowie der heterogenen Gemischverteilung in den Brennräumen des Verbrennungsmotors. Im Gegensatz zur Beladung eines Dieselpartikelfilters erfolgt die Rußbeladung eines Ottopartikelfilters im Wesentlichen in Abhängigkeit der Brennraumtemperatur und nimmt mit zunehmender Brennraumtemperatur ab. Die Kaltstartphase ist somit maßgeblich für die Einhaltung der gesetzlich vorgeschriebenen Partikelgrenzwerte, sowohl bezüglich der Partikelmasse als auch bezüglich der Partikelanzahl. Bei kalten Außentemperaturen, insbesondere bei Umgebungstemperaturen unterhalb von 0°C werden bei einem Ottomotor aufgrund der geringen Gemischhomogenisierung und Verdampfung des Kraftstoffs sowie der Startanreicherung besonders hohe Partikelemissionen emittiert. Zudem führt ein Kaltstart mit einem unterstöchiometrischen, fetten Verbrennungsluftverhältnis zu höheren Emissionen an Kohlenmonoxid (CO) und unverbrannten Kohlenwasserstoffen (HC), da eine Konvertierung in Kohlenstoffdioxid und Wasserdampf aufgrund des kalten Katalysators noch nicht möglich ist. Im Fahrbetrieb wird bei Kraftfahrzeugen mit einem Ottopartikelfilter dieser Ottopartikelfilter dann weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann. Während bei einem Dieselmotor die Rußbeladung des Partikelfilters im Wesentlichen kontinuierlich im Betrieb erfolgt, so emittiert der Ottomotor Rußpartikel vor allem in einer Kaltstartphase des Verbrennungsmotors, wobei die Rußbildung mit sinkender Umgebungstemperatur steigt. Der höchste Anteil der Rußrohemissionen beim fremdgezündeten Verbrennungsmotor stammt infolge der kalten Brennraumwände und der somit unzureichenden Verdampfung des Kraftstoffs aus einer Kaltstartphase bei niedrigen Umgebungstemperaturen, insbesondere bei Umgebungstemperaturen unter 0°C.

Um die Rußentstehung in der Kaltstartphase eines fremdgezündeten Verbrennungsmotors zu vermindern, sind beispielsweise eine Verringerung der Startanreicherung, der Einsatz einer Mehrfachzündung oder eine Mehrfacheinspritzung zur Vermeidung einer Brennraumwandbenetzung sowie zur verbesserten Gemischaufbereitung bekannt. Diese Maßnahmen sind jedoch meist nur mit hohem Aufwand zu realisieren und daher meist kostenintensiv. Ferner ist die Möglichkeit eines alternativen Zündsystems wie einer Laserzündung oder eine Corona-Zündung bekannt.

Aus der DE 101 31 937 A1 sind eine Einrichtung zur Reduktion von Fahrzeugemissionen sowie ein Verfahren zur Reduktion der Kaltstart-Emissionen eines Verbrennungsmotors bekannt, bei dem die Ventilsteuerzeiten, der Zündwinkel und das Verbrennungsluftverhältnis angepasst werden, um die Verbrennungstemperatur und die Verbrennungseffizienz in der Kaltstartphase zu verbessern und die Kaltstartemissionen zu reduzieren.

Darüber hinaus ist eine Zylinderabschaltung von zumindest einem Brennraum, vorzugsweise von mindestens zwei Brennräumen, insbesondere von der Hälfte der vorhandenen Brennräume, bei einem Verbrennungsmotor bekannt, um bei einer schwachen Motorlast oder einer niedrigen Teillast des Verbrennungsmotors Kraftstoff zu sparen.

Aus der DE 10 2012 022 153 A1 ist ein Verfahren zum Betreiben eines Verbrennungsmotors bekannt, bei der die Zylinderabschaltung eines Verbrennungsmotors dazu genutzt wird, die Abgastemperatur des Verbrennungsmotors zu erhöhen, indem die nicht abgeschalteten Zylinder mit einem unterstöchiometrischen Gemisch betrieben werden und der unverbrannte Kraftstoff des unterstöchiometrischen Gemischs mit dem Sauerstoff, welcher durch die abgeschalteten Zylinder in den Abgaskanal gefördert wird, dort exotherm reagiert.

Aus der DE 39 06 296 A1 ist ein Verfahren zur Reduzierung der Abgasemissionen eines Ottomotors mit einer Abgasnachbehandlungsvorrichtung bekannt, wobei die Frischluft vor Eintritt in den Brennraum des Motors kurzfristig intensiv elektrisch beheizt wird. Dabei wird eine elektrische Heizleistung von 1 KW oder mehr in den Frischluftstrom eingebracht, um die Gemischbildung und das Zündverhalten des Kraftstoffs bei einem Kaltstart zu verbessern.

Aus der DE 10 2016 208 177 A1 ist ein Verfahren zum Starten eines direkteinspritzenden Verbrennungsmotors bei kalten Umgebungstemperaturen von weniger als -15°C bekannt. Vor dem Start des Verbrennungsmotors wird mittels eines Nockenwellenverstellers das Öffnen und Schließen der Einlassventile in Richtung "spät" verschoben. Dies führt zu einer starken Dekompression und damit zu einer nur sehr kleinen eingeschlossenen Luftmasse in dem Zylinder des Verbrennungsmotors.

Die DE 10 2010 034 443 A1 offenbart ein Verfahren zum Starten eines Verbrennungsmotors in einem Hybridfahrzeug mit dem Verbrennungsmotor und einem elektrischen Antriebsmotor. Dabei wird der Verbrennungsmotor durch den elektrischen Antriebsmotor geschleppt, um die Brennräume des Verbrennungsmotors vorzuwärmen.

Aus der DE 10 2010 048 355 A1 ist ein Zylinderabschaltungssystem für einen Verbrennungsmotor bekannt. Das Zylinderabschaltungssystem umfasst ein Kraftstoffinjektionsmodul und ein Kaltstartsteuermodul. Das Kraftstoffinjektionsmodul injiziert während eines Anlassvorgangs eine gewünschte Menge an Kraftstoff in einen Zylinder des Verbrennungsmotors. Das Kaltstartsteuermodul hält ein Ansaugventil und ein Abgasventil des Verbrennungsmotors in einer geschlossenen Position, während die gewünschte Menge an Kraftstoff injiziert wird, wenn die Lufttemperatur und/oder eine Kühlmitteltemperatur des Verbrennungsmotors unter einer Schwellentemperatur liegen.

Die DE 10 2015 103 991 A1 offenbart ein Verfahren zum langsamen Drehen eines Verbrennungsmotors ohne Kraftstoffzufuhr zu den Brennräumen. Dabei wird der Verbrennungsmotor durch einen Motor vor einem bevorstehenden Start des Verbrennungsmotors gedreht. Durch das Drehen des Verbrennungsmotors wird die Luft in den Brennräumen komprimiert und auf die Zylinderwände übertragen. Dadurch können bei einem Neustart des Verbrennungsmotors die aufgrund der Kraftstoffdirekteinspritzung erzeugten Partikelemissionen reduziert werden.

Nachteilig an einer solchen Lösung ist jedoch, dass bei kalten Außentemperaturen auch die Leistungsfähigkeit der Fahrzeugbatterie stark abnimmt und die Reibung der Motorkomponenten durch eine höhere Viskosität des kalten Öls zunimmt, sodass gerade in solchen Situationen eine starke Belastung der Fahrzeugbatterie zu vermeiden ist.

Der Erfindung liegt nun die Aufgabe zugrunde, die Rußemissionen in der Kaltstartphase eines Verbrennungsmotors zu verringern und die aus dem Stand der Technik bekannten Nachteile zu überwinden.

Erfindungsgemäß wird diese Aufgabe durch ein Verfahren zur Reduzierung der Partikelemission eines Verbrennungsmotors bei einem Kaltstart des Verbrennungsmotors gelöst, welches folgende Schritte umfasst:
- Ermitteln einer Brennraumtemperatur des Verbrennungsmotors und einer Umgebungstemperatur,
- Schleppen des Verbrennungsmotors durch einen Starter, wenn die Brennraumtemperatur unter einer ersten Schwellentemperatur und die Umgebungstemperatur unter einer zweiten Schwellentemperatur liegt, wobei
- die in den Brennräumen befindliche Luft verdichtet wird und sich erwärmt, wobei
- die Wärme auf die Brennraumwände der Brennräume des Verbrennungsmotors übertragen wird, und wobei das Einspritzen von Kraftstoff in die Brennräume des Verbrennungsmotors in dieser Betriebssituation unterbunden wird, solange die Brennraumtemperatur unter der ersten Schwellentemperatur liegt, und
- Zuschalten der Einspritzung von Kraftstoff in die vorgewärmten Brennräumen, wenn ein definiertes Zeitintervall verstrichen ist, eine bestimmte Anzahl von Motorumdrehungen erreicht ist oder der Brennraum eine definierte Mindesttemperatur erreicht hat.

Bei dem erfindungsgemäßen Verfahren wird bei einem Kaltstart in kalter Umgebung der Verbrennungsmotor zunächst als "Luftpumpe" betrieben, wobei kein Kraftstoff in die Brennräume eingespritzt wird, sodass eine Verbrennung und eine damit verbundene Rußbildung ausgeschlossen wird. Haben sich die Brennraumwände durch das Verdichten der Luft entsprechend erwärmt, wird die Kraftstoffeinspritzung zugeschaltet, sodass die Verdampfung von Kraftstoff verbessert wird und der Kraftstoff insbesondere nicht mehr auf eine kalte Brennraumwand trifft. Dabei kann der Startvorgang mit einer geringeren Anreicherung an Kraftstoff erfolgen und bedingt durch die wärmeren Brennraumwände und die verbesserte Gemischhomogenisierung eine Rußminderung erzielt werden.

Durch die in den abhängigen Ansprüchen genannten Merkmale sind vorteilhafte Verbesserungen und Weiterentwicklungen des im unabhängigen Anspruch genannten Verfahrens zur Reduzierung der Partikelemissionen möglich.

In einer bevorzugten Ausführungsform des Verfahrens ist vorgesehen, dass beim Unterbinden der Kraftstoffeinspritzung zeitgleich auch das Einbringen von Zündfunken in die Brennräume des Verbrennungsmotors unterbunden wird. Da sich bei dem erfindungsgemäßen Verfahren zunächst kein zündfähiges Verbrennungsluftgemisch in den Brennräumen befindet, kann in dieser Betriebsphase auch auf das Einbringen von Zündfunken verzichtet werden. Dies verringert den Energieverbrauch und erhöht die Lebensdauer der Zündkerzen.

In einer vorteilhaften Ausführungsform des Verfahrens ist vorgesehen, dass die Abschaltung der Kraftstoffeinspritzung in Abhängigkeit der ermittelten Umgebungstemperatur für einen definierten Zeitraum erfolgt, und nach diesem definierten Zeitraum Kraftstoff in die Brennräume des Verbrennungsmotors eingespritzt wird. Je kälter die Umgebungstemperatur und je kälter die Brennraumtemperatur, desto länger wird der Verbrennungsmotor als Luftpumpe betrieben, um eine entsprechende Temperaturerhöhung der Brennraumwände zu erreichen. Durch eine Abhängigkeit des Zeitraums von der ermittelten Umgebungstemperatur kann sichergestellt werden, dass sich die Brennraumwände hinreichend erwärmen, um eine Rußpartikelbildung zu reduzieren.

Bevorzugt ist dabei, wenn die zweite Schwellentemperatur kleiner oder gleich 0°C ist. Versuchsergebnisse haben gezeigt, dass bei kaltem Verbrennungsmotor und Umgebungstemperaturen unter 0°C die Rußbildung in den Brennräumen deutlich zunimmt. Unter einem kalten Verbrennungsmotor ist in diesem Zusammenhang ein Verbrennungsmotor zu verstehen, dessen Temperatur der Brennraumwände sich vor einem Start nur unwesentlich von der Umgebungstemperatur unterscheidet.

Erfindungsgemäß ist vorgesehen, dass bei Durchführung des Verfahrens die Drosselklappe im Ansaugkanal des Verbrennungsmotors vollständig geöffnet wird. Durch ein Öffnen der Drosselklappe kann möglichst viel Frischluft in die Brennräume des Verbrennungsmotors einströmen. Dadurch kann der Spitzendruck bei der Kompression der Frischluft erhöht werden, wodurch sich die Brennräume schneller erwärmen als bei einem gedrosselten Einströmen von Frischluft.

In einer vorteilhaften Weiterentwicklung des Verfahrens ist vorgesehen, dass eine Kraftstoffpumpe zur Kraftstoffversorgung von Kraftstoffeinspritzventilen bei abgeschalteter Kraftstoffeinspritzung angetrieben wird, um Kraftstoffdruck in der Kraftstoffzuleitung zu den Kraftstoffeinspritzventilen aufzubauen. Durch den Druckaufbau kann der Kraftstoff nach Zuschalten der Kraftstoffeinspritzung mit höherem Druck in die Brennräume eingespritzt werden, wodurch eine bessere Zerstäubung des Kraftstoffs und damit verbunden eine geringere Rußbildung erreicht werden kann.

Ferner ist mit Vorteil vorgesehen, dass in Abhängigkeit der Umgebungstemperatur der Einspritzdruck nach dem Zuschalten der Kraftstoffeinspritzung gegenüber einem gleichartigen Betriebspunkt ohne eine Abschaltung der Kraftstoffeinspritzung erhöht wird. Ein Anheben des Einspritzdrucks in der Kaltstartphase führt zusätzlich zu den vorhergehenden Maßnahmen dazu, dass der Kraftstoff feiner zerstäubt wird und sich ein homogeneres Verbrennungsgemisch in den Brennräumen bildet. Dies senkt die Rußemissionen des Verbrennungsmotors. Erfindungsgemäß wird ein Steuergerät für den Verbrennungsmotor vorgeschlagen, wobei das Steuergerät derart eingerichtet ist, dass ein erfindungsgemäßes Verfahren ausgeführt wird, wenn ein maschinenlesbarer Programmcode durch das Steuergerät ausgeführt wird. Durch ein erfindungsgemäßes Steuergerät kann bei einem Verbrennungsmotor mit Kraftstoff-Direkteinspritzung auf einfache und kostengünstige Art und Weise ein erfinderisches Verfahren zur Reduzierung der Kaltstartemissionen, insbesondere der Partikelemissionen, umgesetzt werden. Dabei kann diese Lösung rein softwaretechnisch implementiert werden, sodass keine zusätzliche Hardware notwendig ist. Somit lässt sich das Verfahren im Wesentlichen kostenneutral an einem Verbrennungsmotor mit Kraftstoff-Direkteinspritzung implementieren.

Ferner wird erfindungsgemäß ein Kraftfahrzeug mit einem Verbrennungsmotor mit mindestens einem Brennraum, vorzugsweise mit mindestens drei Brennräumen, einem Steuergerät sowie mit einer Abgasanlage vorgeschlagen, in der mindestens ein Partikelfilter oder ein Vier-Wege-Katalysator angeordnet ist. Das vorgeschlagene Verfahren lässt sich sowohl an Dieselmotoren als auch an Benzinmotoren einfach und kostengünstig durch ein Softwareprogramm auf dem Steuergerät des Verbrennungsmotors implementieren. Da Dieselmotoren aber im Wesentlichen kontinuierlich Ruß emittieren und auch in einem Normalbetrieb des Verbrennungsmotors, insbesondere bei starken Beschleunigungsvorgängen Ruß emittieren, ist die Wirksamkeit dieses Verfahren für einen Dieselmotor begrenzt. Prinzipiell führt das vorgeschlagene Verfahren jedoch bei allen Verbrennungsmotoren zu einer Reduzierung der Kaltstartemissionen, insbesondere der Partikelemissionen bei einem Kaltstart des Verbrennungsmotors.

In einer bevorzugten Ausführungsform des Kraftfahrzeuges ist vorgesehen, dass der Verbrennungsmotor ein mittels Zündkerzen fremdgezündeter Ottomotor und der mindestens eine Partikelfilter ein Ottopartikelfilter oder ein Vier-Wege-Katalysator ist. Bei einem Ottomotor werden, wie eingangs erwähnt, vor allem in der Kaltstartphase des Verbrennungsmotors Rußpartikel emittiert. Daher ist das vorgeschlagene Verfahren zur Reduzierung der Kaltstartemissionen bei einem Ottomotor besonders vorteilhaft, da zunächst die Brennraumwände der Brennräume erwärmt werden, bevor der Kraftstoff in die Brennräume eingespritzt wird. Bei einem späteren Zuschalten der Kraftstoffeinspritzung und der Zündung trifft der Kraftstoff nun auf vorgewärmte Brennraumwände, welche ein Verdampfen des Kraftstoffs begünstigen und die Partikelemissionen reduzieren. Dabei werden für das Vorheizen der Brennräume keine zusätzlichen Bauteile wie Glühkerzen benötigt. Zudem kann das erfindungsgemäße Verfahren mit weiteren, aus dem Stand der Technik bekannten Maßnahmen zur Reduzierung der Kaltstartemissionen bei einem fremdgezündeten Verbrennungsmotor, wie beispielsweise einer Mehrfachzündung, einer Erhöhung des Einspritzdrucks, einer Mehrfacheinspritzung oder einer Verringerung der Startanreicherung kombiniert werden. Dadurch ist eine weitere Reduzierung der Kaltstartemissionen, insbesondere der Partikelemissionen, möglich.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen Verbrennungsmotor mit einer Luftversorgung, einem Kraftstoff-Einspritzsystem, einem Zündsystem und einer Abgasanlage, an dem ein erfindungsgemäßes Verfahren zur Reduzierung der Kaltstart-Emissionen durchgeführt werden kann; und
- Figur 2: ein Ablaufdiagramm zur Durchführung eines erfindungsgemäßen Verfahrens zur Reduzierung der Kaltstart-Emissionen eines fremdgezündeten Verbrennungsmotors.

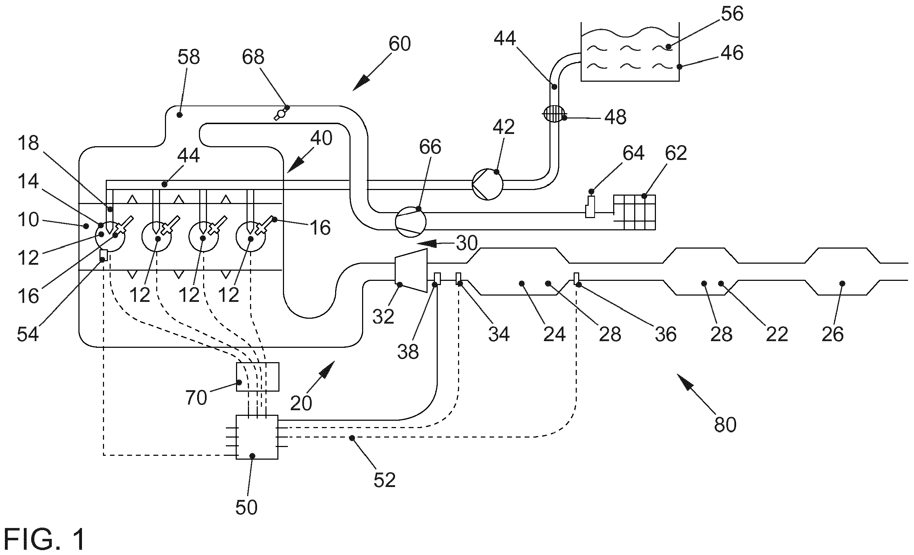

Figur 1 zeigt einen fremdgezündeten Verbrennungsmotor 10 für ein Kraftfahrzeug 80, mit einer Abgasanlage 20, in welcher in Strömungsrichtung des Abgases des Verbrennungsmotors 10 durch die Abgasanlage ein motornaher Drei-Wege-Katalysator 24, stromabwärts des motornahen Drei-Wege-Katalysators 24 ein Partikelfilter 22 und weiter stromabwärts ein weiterer Drei-Wege-Katalysator 26 angeordnet sind. In einer vereinfachten Ausführungsform kann der zweite Drei-Wege-Katalysator 26 auch entfallen. Zusätzlich zu dem Drei-Wege-Katalysator 24 und dem Partikelfilter 22 können in der Abgasanlage weitere Katalysatoren und Abgasnachbehandlungsvorrichtungen angeordnet sein, insbesondere ein NOx-Speicherkatalysator. Der Partikelfilter 22 kann eine drei-Wege-katalytisch wirksame Beschichtung aufweisen, und als sogenannter Vier-Wege-Katalysator 28 ausgebildet sein, wobei der Partikelfilter 22 in diesem Fall die Funktionen des Drei-Wege-Katalysators 24 und des Partikelfilters 22 in einem Bauteil vereint. Der Verbrennungsmotor 10 wird über ein Luftversorgungssystem 60 mit Frischluft versorgt. Dabei sind in einem Ansaugkanal 58 des Verbrennungsmotors 10 ein Luftfilter 62 und ein Luftmassenmesser 64 angeordnet. Die Frischluft kann mittels eines Kompressors und/oder eines Abgasturboladers 30 verdichtet werden, wobei in der Abgasanlage 20 eine Turbine 32 angeordnet ist, welche einen Verdichter 66 in dem Luftversorgungssystem 60 des Verbrennungsmotors 10 antreibt. Auf diese Art und Weise wird die den Brennräumen 12 des Verbrennungsmotors 10 zugeführte Frischluft verdichtet. Zur Steuerung der den Brennräumen 12 zugeführten Frischluftmenge ist in dem Ansaugtrakt 58 eine Drosselklappe 68 angeordnet. Der Verbrennungsmotor 10 weist ferner eine Kraftstoffversorgung auf, bei welcher Kraftstoff 56 aus einem Kraftstofftank 46 mittels einer Kraftstoffpumpe 42 durch eine Kraftstoffleitung 44 einem Kraftstoffstoffeinspritzsystem 40 zugeführt und bedarfsgerecht in den Ansaugtrakt 58 oder in die Brennräume 12 des Verbrennungsmotors 10 eingespritzt wird. Vorzugsweise wird der Kraftstoff 56 durch an den Brennräumen 12 angeordnete Kraftstoffeinspritzventile 18 in den jeweiligen Brennraum 12 des Verbrennungsmotors 10 eingespritzt. In der Kraftstoffleitung 44 ist zwischen dem Kraftstofftank 46 und der Kraftstoffpumpe 42 ein Kraftstofffilter 48 vorgesehen, um Verunreinigungen aus dem Kraftstoff 56 zu entfernen und somit die Kraftstoffpumpe 42 sowie das Kraftstoffeinspritzsystem 40 vor Beschädigungen durch verunreinigten Kraftstoff 56 zu schützen. Der Verbrennungsmotor 10 weist ferner einen Zündverteiler auf, über welchen Zündkerzen 16 an den Brennräumen 12 angesteuert werden können und jeweils einen oder mehrere Zündfunken in den Brennraum 12 emittiert. Somit kann das Verbrennungsluftgemisch in den Brennräumen 12 gezündet werden. In der Abgasanlage 20 des Verbrennungsmotors 10 sind in Strömungsrichtung eines Abgases des Verbrennungsmotors 10 durch die Abgasanlage 20 stromaufwärts des Drei-Wege-Katalysators 24 und stromabwärts des Drei-Wege-Katalysators 24 Lambdasonden 34, 36 angeordnet, mit welchen das Verbrennungsluftverhältnis λ des Verbrennungsmotors 10 geregelt werden kann. Dazu sind die Lambdasonden 34, 36, das Kraftstoffeinspritzsystem 40 und der Zündverteiler über Signalleitungen 52 mit einem Steuergerät 50 des Verbrennungsmotors 10 verbunden, über welche das Verbrennungsluftverhältnis λ, die Kraftstoffmenge und der Zündzeitpunkt, an dem die Zündkerzen 16 jeweils einen Zündimpuls emittieren, gesteuert werden. Ferner kann in der Abgasanlage 20 ein Temperatursensor 38 vorgesehen sein, über welchen eine Abgastemperatur T_{EG} ermittelt und zur Steuerung des Verbrennungsmotors 10 genutzt werden kann.

Der Partikelfilter 22 oder der Vier-Wege-Katalysator 28, welcher den Drei-Wege-Katalysator 24 und den Partikelfilter 22 ersetzen kann, haben die Aufgabe, das Abgas von Partikeln zu befreien. Dabei werden die Partikel im Filter abgeschieden und das Abgas gereinigt. Durch diesen Abscheidemechanismus werden der Partikelfilter 22 oder der Vier-Wege-Katalysator 28 mit Ruß beladen. Infolge der Beladung können negative Effekte wie Leistungsverlust, höherer Kraftstoffverbrauch, oder auch Zündaussetzer auftreten. Um diese negativen Effekte zu vermeiden, muss der Partikelfilter 22 oder der Vier-Wege-Katalysator 28 zyklisch und/oder in Abhängigkeit der Beladung regeneriert werden. Während bei einem Dieselmotor die Beladung eines Partikelfilters 22, 28 quasi kontinuierlich erfolgt und insbesondere bei starken Beschleunigungen oder Volllast ein Problem ist, emittieren Ottomotoren Partikel insbesondere in einer Kaltstartphase des Verbrennungsmotors 10. Bei niedrigen Außentemperaturen, insbesondere bei Außentemperaturen unterhalb von 0°C, werden bei einem Ottomotor aufgrund der geringen Gemischhomogenisierung und der geringen Verdampfung des Kraftstoffs sowie der Startanreicherung sehr hohe Partikelemissionen emittiert. Der höchste Anteil der Rußemissionen stammt aus der Folge, dass der Kraftstoff 56 bei kalten Brennraumwänden 14 der Brennräume 12 nur unzureichend verdampft. Durch die hohen Rußemissionen in der Kaltstartphase wird der Partikelfilter 22 oder der Vier-Wege-Katalysator 28 schnell mit Ruß beladen, sodass eine häufige Regeneration des Partikelfilters 22 oder des Vier-Wege-Katalysator 28 notwendig ist. Eine Regeneration des Partikelfilters 22 oder des Vier-Wege-Katalysators 28 ist insbesondere durch einen überstöchiometrischen Betrieb des Verbrennungsmotors 10 oder durch das Einbringen von Sekundärluft in die Abgasanlage 20 möglich. Bei einem überstöchiometrischen Betrieb des Verbrennungsmotors 10 kommt es zudem zu einem Anstieg der Stickoxidemissionen, da diese nicht mehr durch einen der Drei-Wege-Katalysatoren 22, 26 oder den Vier-Wege-Katalysator 28 in ungiftige Abgaskomponenten konvertiert werden können.

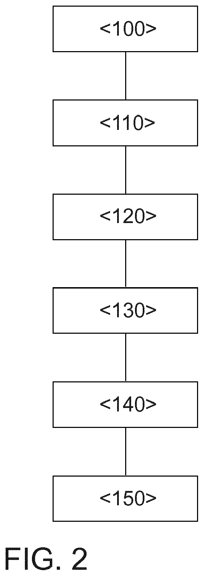

In Figur 2 ist ein Ablaufdiagramm eines erfindungsgemäßen Verfahrens zur Reduzierung der Partikelemissionen bei einem Kaltstart des Verbrennungsmotors 10 dargestellt. Dabei wird in einem ersten Verfahrensschritt <100> geprüft, ob die Brennraumtemperatur T_{BR} unter einer ersten Schwellentemperatur T_{S1} und die Umgebungstemperatur T_{UMG} unterhalb einer zweiten Schwellentemperatur T_{S2} liegen. Dabei ist als zweite Schwellentemperatur T_{S2} insbesondere eine Temperatur von 0°C oder niedriger vorgesehen. In einem zweiten Verfahrensschritt <110> wird der Verbrennungsmotor 10 gestartet, wobei mindestens der Verbrennungsmotor 10 durch einen Starter geschleppt wird, wenn ein Kaltstart erkannt wird. Ein Kaltstart wird dann erkannt, wenn sowohl die Brennraumtemperatur T_{BR} als auch die Umgebungstemperatur T_{UMG} unter der jeweiligen Schwellentemperatur T_{S1}, T_{S2} liegen. Durch das Schleppen des Verbrennungsmotors 10 wird die Frischluft in einem Verfahrensschritt <120> in den Brennräumen 12 verdichtet und erwärmt sich. Dabei wird die Wärme der verdichteten Luft auf die Brennraumwände 14 der Brennräume 12 übertragen, welche sich ebenfalls erwärmen. Dabei wird in diesem Schleppbetrieb kein Kraftstoff 56 in die Brennräume 12 eingespritzt, sodass es in diesem Betriebszustand zu keiner Verbrennung kommt. In dem in Figur 1 dargestellten Ausführungsbeispiel ist der Verbrennungsmotor 10 als 4-Zylinder-Reihenmotor ausgeführt, wobei die Kraftstoffeinspritzung in die vier Brennräume 12 in der Kaltstartphase unterbunden wird. Parallel wird in einem Verfahrensschritt <130> die Kraftstoffeinspritzpumpe 42 betrieben, um Kraftstoffdruck aufzubauen. Zusätzlich wird in einem Verfahrensschritt <140> die Drosselklappe 68 in dem Ansaugkanal 58 geöffnet, um möglichst viel Frischluft in die Brennräume 12 zu leiten und dort komprimieren zu können. Haben die Brennraumwände eine definierte Mindesttemperatur Tₘᵢₙ erreicht oder der Verbrennungsmotor 10 eine bestimmte Anzahl von Umdrehungen erreicht, werden in einem Verfahrensschritt <150> die Kraftstoffeinspritzung und die Zündung aktiviert. Durch den vorhergehenden Druckaufbau kann der Einspritzdruck des in die Brennräume 12 eingespritzten Kraftstoffs 56 erhöht werden, um eine bessere Zerstäubung des Kraftstoffs 56 zu erzielen und somit feinere Tröpfchen zu bilden, sodass die Gefahr des Auftreffens von unverbranntem, flüssigen Kraftstoff 56 auf die kalte Brennraumwand 14 des Brennraums 12 verringert wird.

Zusammenfassend bleibt festzuhalten, dass durch ein erfindungsgemäßes Verfahren die Rußemissionen in der Kaltstartphase eines Verbrennungsmotors 10 auf einfache und kostengünstige Art und Weise verringert werden können, wobei keine zusätzlichen Bauteile oder sonstigen Änderungen am Verbrennungsmotor 10 notwendig sind.

### Bezugszeichenliste

- 10: Verbrennungsmotor
- 12: Brennraum
- 14: Brennraumwand
- 16: Zündkerze
- 18: Kraftstoffeinspritzventil

- 20: Abgasanlage
- 22: Partikelfilter
- 24: erster Drei-Wege-Katalysator
- 26: zweiter Drei-Wege-Katalysator
- 28: Vier-Wege-Katalysator

- 30: Abgasturbolader
- 32: Turbine
- 34: erste Lambdasonde
- 36: zweite Lambdasonde
- 38: Temperatursensor

- 40: Kraftstoffeinspritzsystem
- 42: Kraftstoffpumpe
- 44: Kraftstoffleitung
- 46: Kraftstofftank
- 48: Kraftstofffilter

- 50: Steuergerät
- 52: Signalleitung
- 54: Temperatursensor
- 56: Kraftstoff
- 58: Ansaugleitung
- 60: Luftversorgungssystem
- 62: Luftfilter
- 64: Luftmassenmesser
- 66: Verdichter
- 68: Drosselklappe

- 80: Kraftfahrzeug

- λ_{E}: Verbrennungsluftverhältnis
- T: Temperatur
- Tₘᵢₙ: Mindesttemperatur
- T_{S}: Schwellentemperatur
- T_{UMG}: Umgebungstemperatur

## Patentansprüche

1. Verfahren zur Reduzierung der Partikelemissionen eines Verbrennungsmotors (10) bei einem Kaltstart des Verbrennungsmotors (10), umfassend folgende Schritte:
- Ermitteln einer Brennraumtemperatur (T_{BR}) des Verbrennungsmotors (10) und einer Umgebungstemperatur (T_{UMG})
- Schleppen des Verbrennungsmotors (10) durch einen Starter, wenn die Brennraumtemperatur (T_{BR}) unter einer ersten Schwellentemperatur (T_{S1}) und die Umgebungstemperatur (T_{UMG}) unterhalb einer zweiten Schwellentemperatur (T_{S2}) liegt, wobei
- die in den Brennräumen (12) befindliche Luft verdichtet wird und sich erwärmt, wobei
- die Wärme auf die Brennraumwände (14) der Brennräume (12) des Verbrennungsmotors (10) übertragen wird, und wobei
- das Einspritzen von Kraftstoff in den Brennräumen (12) des Verbrennungsmotors (10) in dieser Betriebssituation unterbunden wird, solange die Brennraumtemperatur (T_{BR}) unter der ersten Schwellentemperatur (T_{S1}) liegt, und
- Zuschalten der Einspritzung von Kraftstoff in die vorgewärmten Brennräume (12), wenn ein definiertes Zeitintervall verstrichen ist, eine bestimmte Anzahl von Motorumdrehungen erreicht ist oder der Brennraum (12) eine definierte Mindesttemperatur (Tₘᵢₙ) erreicht hat,
**dadurch gekennzeichnet, dass** bei Durchführung des Verfahrens eine Drosselklappe (68) im Ansaugkanal (58) des Verbrennungsmotors (10) vollständig geöffnet wird.

2. Verfahren nach Anspruch 1, **dadurch gekennzeichnet, dass** beim Unterbinden der Kraftstoffeinspritzung zeitgleich auch das Einbringen von Zündfunken in die Brennräume (12) des Verbrennungsmotors (10) unterbunden wird.

3. Verfahren nach Anspruch 1 oder 2, **dadurch gekennzeichnet, dass** zusätzlich die Abschaltung der Kraftstoffeinspritzung in Abhängigkeit der ermittelten Umgebungstemperatur (T_{UMG}) für einen definierten Zeitraum erfolgt, und nach diesem definierten Zeitraum Kraftstoff (56) in die Brennräume (12) des Verbrennungsmotors (10) eingespritzt wird.

4. Verfahren nach einem der Ansprüche 1 bis 3, **dadurch gekennzeichnet, dass** die zweite Schwellentemperatur (T_{S2}) kleiner oder gleich 0°C ist.

5. Verfahren nach einem der Ansprüche 1 bis 4, **dadurch gekennzeichnet, dass** eine Kraftstoffpumpe (42) zur Kraftstoffversorgung von Kraftstoffeinspritzventilen (18) bei abgeschalteter Kraftstoffeinspritzung angetrieben wird, um Kraftstoffdruck in der Kraftstoffzuleitung zu den Kraftstoffeinspritzventilen (18) aufzubauen.

6. Verfahren nach einem der Ansprüche 1 bis 5, **dadurch gekennzeichnet, dass** in Abhängigkeit der Umgebungstemperatur (T_{UMG}) der Einspritzdruck nach dem Zuschalten der Kraftstoffeinspritzung gegenüber einem gleichartigen Betriebspunkt ohne eine Abschaltung der Kraftstoffeinspritzung erhöht wird.

7. Steuergerät (50) für einen Verbrennungsmotor (10), wobei das Steuergerät (50) derart eingerichtet ist, dass ein Verfahren nach einem der Ansprüche 1 bis 6 ausgeführt wird, wenn ein maschinenlesbarer Programmcode durch das Steuergerät (50) ausgeführt wird.

8. Kraftfahrzeug (80) mit einem Verbrennungsmotor (10) mit mindestens einem Brennraum (12), einem Steuergerät (50) nach Anspruch 7, sowie einer Abgasanlage (20), in der mindestens ein Partikelfilter (22) oder ein Vier-Wege-Katalysator (24) angeordnet ist.

9. Kraftfahrzeug (80) nach Anspruch 8, **dadurch gekennzeichnet, dass** der Verbrennungsmotor (10) ein fremdgezündeter Ottomotor und der mindestens eine Partikelfilter (22) ein Ottopartikelfilter oder ein Vier-Wege-Katalysator (28) ist.

## Claims

1. Method for reducing the particle emissions of a combustion engine (10) during a cold start of the combustion engine (10), comprising the following steps:
- determining a combustion chamber temperature (T_{BR}) of the combustion engine (10) and of an ambient temperature (T_{UMG})
- turning over the combustion engine (10) via a starter if the combustion chamber temperature (T_{BR}) is below a first threshold temperature (Tsi) and the ambient temperature (T_{UMG}) is below a second threshold temperature (T_{S2}), wherein
- the air in the combustion chambers (12) is compressed and heated, wherein
- the heat is transferred to the combustion chamber walls (14) of the combustion chambers (12) of the combustion engine (10), and wherein
- the injection of fuel into the combustion chambers (12) of the combustion engine (10) is prevented in this operating situation as long as the combustion chamber temperature (T_{BR}) is below the first threshold temperature (Tsi), and
- activating the injection of fuel into the preheated combustion chambers (12) if a defined time interval has elapsed, a certain number of engine revolutions has been reached, or the combustion chamber (12) has reached a defined minimum temperature (Tₘᵢₙ), **characterized in that** a throttle valve (68) in the intake duct (58) of the combustion engine (10) is fully opened when the method is implemented.

2. Method according to claim 1, **characterized in that**, when fuel injection is suppressed, the introduction of ignition sparks into the combustion chambers (12) of the combustion engine (10) is also suppressed at the same time.

3. Method according to claim 1 or 2, **characterized in that**, in addition, the fuel injection is switched off for a defined period of time depending on the determined ambient temperature (T_{UMG}), and afterward fuel (56) is injected into the combustion chambers (12) of the combustion engine (10).

4. Method according to one of the claims 1 to 3, **characterized in that** the second threshold temperature (T_{S2}) is less than or equal to 0°C.

5. Method according to one of the claims 1 to 4, **characterized in that** a fuel pump (42) for supplying fuel to fuel injectors valves (18) is driven with the fuel injection switched off, in order to build up fuel pressure in the fuel supply line to the fuel injector valves (18).

6. Method according to one of the claims 1 to 5, **characterized in that**, depending on the ambient temperature (T_{UMG}), after the fuel injection is switched on the injection pressure is increased as compared to a similar operating point without the fuel injection being switched off.

7. Control unit (50) for a combustion engine (10), wherein the control unit (50) is configured such that a method according to one of the claims 1 to 6 is implemented if a machine-readable program code is executed by the control unit (50).

8. Motor vehicle (80) having a combustion engine (10) having at least one combustion chamber (12), a control device (50) according to claim 7, and an exhaust system (20) in which at least one particle filter (22) or a four-way catalytic converter (24) is arranged.

9. Motor vehicle (80) according to claim 8, **characterized in that** the combustion engine (10) is a spark-ignition gasoline engine, and the at least one particle filter (22) is a gasoline particle filter or a four-way catalytic converter (28).

## Revendications

1. Procédé de réduction des émissions de particules d'un moteur à combustion interne (10) lors d'un démarrage à froid du moteur à combustion interne (10), comprenant les étapes suivantes :
- détermination d'une température de chambre de combustion (T_{BR}) du moteur à combustion interne (10) et d'une température ambiante (T_{UMG})
- entraînement du moteur à combustion interne (10) par le biais d'un démarreur, lorsque la température de chambre de combustion (T_{BR}) est inférieure à une première température seuil (T_{S1}) et la température ambiante (T_{UMG}) est inférieure à une deuxième température seuil (T_{S2}),
- l'air présent dans les chambres de combustion (12) étant comprimé et se réchauffant,
- la chaleur étant transférée aux parois de chambre de combustion (14) des chambres de combustion (12) du moteur à combustion interne (10) et
- l'injection de carburant dans les chambres de combustion (12) du moteur à combustion interne (10) étant coupée dans cette situation de fonctionnement, tant que la température de chambre de combustion (T_{BR}) est inférieure à la première température seuil (T_{S1}) et
- l'activation de l'injection de carburant dans les chambres de combustion (12) préchauffées, lorsqu'un intervalle de temps défini s'est écoulé, un nombre déterminé de tours de rotation du moteur est atteint ou la chambre de combustion (12) a atteint une température minimale (Tₘᵢₙ) définie,
**caractérisé en ce que** lors de l'exécution du procédé une vanne papillon (68) est complètement ouverte dans le canal d'aspiration (58) du moteur à combustion interne (10).

2. Procédé selon la revendication 1, **caractérisé en ce que**, lors de la coupure de l'injection de carburant, l'introduction d'étincelles d'allumage dans les chambres de combustion (12) du moteur à combustion interne (10) est aussi coupée simultanément.

3. Procédé selon la revendication 1 ou 2, **caractérisé en ce que** la coupure de l'injection de carburant est effectuée en outre pour une période de temps définie en fonction de la température ambiante (T_{UMG}) déterminée et, après cette période de temps définie, du carburant (56) est injecté dans les chambres de combustion (12) du moteur à combustion interne (10).

4. Procédé selon l'une quelconque des revendications 1 à 3, **caractérisé en ce que** la deuxième température seuil (T_{S2}) est inférieure ou égale à 0 °C.

5. Procédé selon l'une quelconque des revendications 1 à 4, **caractérisé en ce qu'**une pompe à carburant (42) est entrainée pour l'alimentation en carburant de soupapes d'injection de carburant (18) lorsque l'injection de carburant est coupée, pour l'établissement de pression de carburant dans la conduite d'alimentation en carburant des soupapes d'injection de carburant (18).

6. Procédé selon l'une quelconque des revendications 1 à 5, **caractérisé en ce qu'**en fonction de la température ambiante (T_{UMG}), la pression d'injection est augmentée après l'activation de l'injection de carburant par rapport à un point de fonctionnement similaire sans prolongement de la coupure de l'injection de carburant.

7. Appareil de commande (50) pour un moteur à combustion interne (10), dans lequel l'appareil de commande (50) est conçu de telle façon qu'un procédé selon l'une quelconque des revendications 1 à 6 est exécuté lorsqu'un code de programme lisible par machine est exécuté par l'appareil de commande (50).

8. Véhicule automobile (80) comprenant un moteur à combustion interne (10) comprenant au moins une chambre de combustion (12), un appareil de commande (50) selon la revendication 7 ainsi qu'un système d'échappement (20), dans lequel au moins un filtre à particules (22) ou un catalyseur à quatre voies (24) est disposé.

9. Véhicule automobile (80) selon la revendication 8, **caractérisé en ce que** le moteur à combustion interne (10) est un moteur à allumage par étincelle commandé et l'au moins un filtre à particule (22) est un filtre à particules d'essence ou un catalyseur à quatre voies (28).
